# EUROPÄISCHE PATENTSCHRIFT

(11) **EP 2 870 053 B1**
(45) Veröffentlichungstag und Bekanntmachung des Hinweises auf die Patenterteilung: **12.06.2019**
(21) Anmeldenummer: 13734374.5
(22) Anmeldetag: 29.06.2013
(51) Int. Cl.: B62D 6/10, G01D 5/20, B60R 16/027, G01L 3/02, B62D 15/02, G01D 11/18

(54) **DREHWINKELSENSOR**
ANGULAR POSITION SENSOR
CAPTEUR D'ANGLE DE ROTATION

(30) Priorität: 04.07.2012 DE 102012105963
(43) Veröffentlichungstag der Anmeldung: 13.05.2015
(73) Patentinhaber: HELLA GmbH & Co. KGaA, 59552 Lippstadt (DE)
(72) Erfinder: ELPERMANN, Thomas, 48291 Telgte (DE); PETERS, Stefan, 59557 Lippstadt (DE)
(86) Internationale Anmeldenummer: PCT/EP2013/063762
(87) Internationale Veröffentlichungsnummer: WO 2014/005963

(56) Entgegenhaltungen:
- EP-A1- 1 895 277
- EP-B1- 1 533 212
- US-A1- 2009 013 821

## Beschreibung

Die Erfindung betrifft einen Drehwinkelsensor zur Bestimmung einer relativen Winkelstellung bezüglich einer Referenzposition, umfassend ein Gehäuse, mindestens einen Rotor, der drehbar in dem Gehäuse gelagert ist und eine Leiterplatte mit elektrischen und/oder elektronischen Bauteilen sowie einem oder mehreren Statoren entsprechend der Anzahl der Rotoren.

Solche induktive Drehmomentsensoren sind an sich bekannt. Sie werden z.B. in Kraftfahrzeugen eingesetzt, um Drehmomente wie Lenkmomente zu ermitteln. Dies wird zunehmend erforderlich, weil vermehrt elektromotorische Servoeinrichtungen zur Lenkhilfe eingesetzt werden. Diese benötigen das Lenkmoment zur Steuerung. Die Lenkmomente werden in einer Lenksäule durch einen Torsionsstab in Differenzwinkeln erkennbar und aus diesen berechnet. Hierfür werden die Verdrehungen an den Enden des Torsionsstabs mittels einer geeigneten Anordnung als Signale bestimmt und in Mittel zum Auswerten geleitet. Die Differenzwinkel, die durch die Torsion bewirkt werden, sind unabhängig von einer Stellung des Lenkrads zu bestimmen.

Weiterhin ist es z.B. für Fahrerassistenzsysteme wie ESP (elektronisches Stabilitätsprogramm für das Fahrverhalten des Fahrzeugs) wichtig, ebenfalls die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet, die für jede vollständige Umdrehung des Lenkrads ein Signal erzeugt und so eine Anzahl der Umdrehungen bestimmt.

Die EP 1 533 212 B1 beschreibt einen Lenkwinkelsensor, bei dem ein Rotor direkt an einer Leiterplatte gelagert ist. Hierfür ist an der Leiterplatte ein Lagerelement verrastet. Eine Rotorstruktur ist an einem Gegenlagerring befestigt, der in dem Lagerelement drehbar befestigt ist. Hierdurch soll eine genaue Positionierung der Rotorstruktur zu der Leiterplatte bewirkt werden. Einflüsse von Temperatur und Verschleiß können nicht kompensiert werden.

Aus der DE 10 2006 037 941 ist ein Lenksensor bekannt, bei dem ein Gehäuse (Trägerteil) aus Metall besteht. Ein Lagerring ist über Kunststoffanbindung mit dem Gehäuse verbunden. Insgesamt sollen Fertigungstoleranzen minimiert werden. Die Fertigung des Gehäuses ist aufwendig. Die Lagerung eines Rotors in dem Gehäuse ist nicht weiter beschrieben.

Die EP 1 895 277 A1 offenbart einen Encoder zur Erfassung von Messwerten mit einem Stator und einem Rotor. Für die Montage ist ein spezielles Montagemittel erforderlich. Die Montage und Herstellung sind insgesamt relativ aufwändig.

Die US 2009/013821 A1 beschreibt einen Drehwinkelsensor, bei dem ein Rotor für eine Montage mittels einer Verzahnung und eines mit dieser kooperierenden Rastelements blockiert werden kann.

Es ist die Aufgabe der Erfindung, einen Drehwinkelsensor zu schaffen, der eine besonders präzise Ausrichtung eines ersten der Rotoren zu einem Stator erlaubt und hierbei preisgünstig herstellbar ist.

Die Aufgabe ist durch die Merkmale des Anspruchs 1 gelöst. Ein erster der Rotoren ist ohne Spiel mit dem Gehäuse verrastet, wobei ein Federring mit Vorspannung auf Rastarme angeordnet ist. Rastverbindungen sind besonders einfach zu montieren. Durch entsprechende Ausbildung von Rastelementen wie Rastfedern und Rastnasen wird erreicht, dass die Rastverbindung hier ohne Spiel ist; dies bewirkt, dass eine besonders präzise Positionierung des ersten Rotors zu dem Stator und somit eine genaue Winkelbestimmung erzielt wird. Der Federring gewährleistet die Einhaltung dieser präzisen Positionierung auch bei hohen Temperaturen, wenn der Kunststoff relativ weich wird und daher eine durch die Rastfedern aufgebrachte Vorspannung nachlässt.

Dabei sind Lagerflächen des ersten Rotors im Gehäuse zwischen einer Rastnase und Rastarmen gebildet. Diese Lagerflächen gewährleisten die axiale Positionierung des ersten Rotors und damit dessen Abstand zu dem zugehörigen Stator. Die Lagerflächen sind klein, so dass geringe Reibung beim Drehen entsteht.

Die Unteransprüche beschreiben die vorteilhafte Ausgestaltung der Erfindung.

In einer weiteren Ausgestaltung ist eine der Lagerflächen durch entsprechend gefaste Flächen an dem ersten Rotor und dem Gehäuse gebildet. Hierdurch wird die radiale Positionierung des ersten Rotors zu dem Stator gewährleistet. Weiterhin werden auf einfache Weise Fertigungstoleranzen und eventueller Verschleiß ausgeglichen.

In einer weiteren Ausgestaltung sind die Lagerflächen mit Schmierstoff versehen. Alternativ oder zusätzlich ist das Gehäuse und/oder Teile des ersten Rotors aus einem Kunststoff mit einem Anteil an eingebettetem Schmierstoff gefertigt.
Hierdurch wird Reibung vermindert.

In einer weiteren Ausgestaltung ist ein Haltering mit freien Enden von Lagersegmenten verschweißt. Hierdurch wird die Stabilität des Rotors gegen Ausrasten aus dem Gehäuse erhöht.

Insgesamt wird ein Drehwinkelsensor geschaffen, der über seine Lebensdauer sehr genau ist, der unter allen Bedingungen gleichbleibende Reibung der beweglich gelagerten Teile aufweist und der keine Geräusche erzeugt.

Anhand der beigefügten Zeichnung wird die Erfindung nachfolgend näher erläutert. Dabei zeigen:
- Figur 1: eine Explosionsdarstellung eines Drehwinkelsensors,
- Figur 2: eine perspektivische Ansicht eines Teil des Drehwinkelsensors,
- Figur 3: einen senkrechten Schnitt durch einen Teil des Drehwinkelsensors und
- Figur 4: eine perspektivische Ansicht eines ersten Rotors.

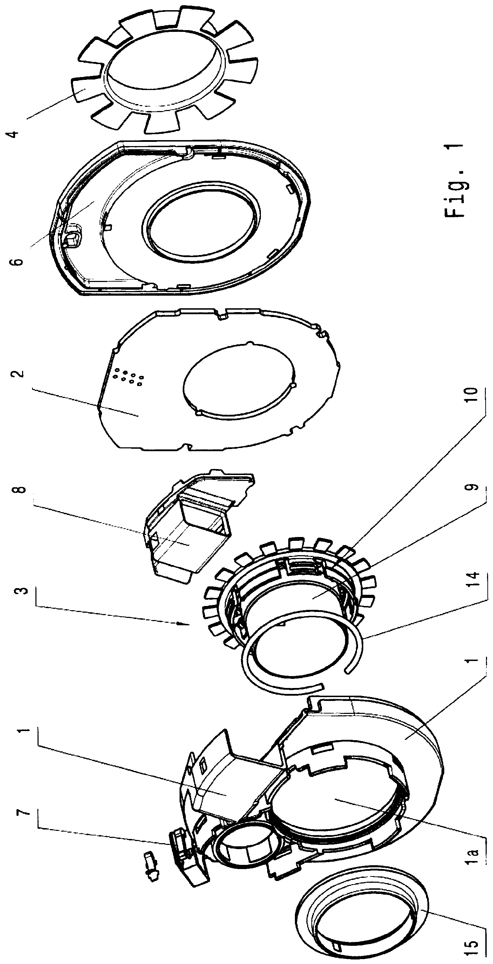

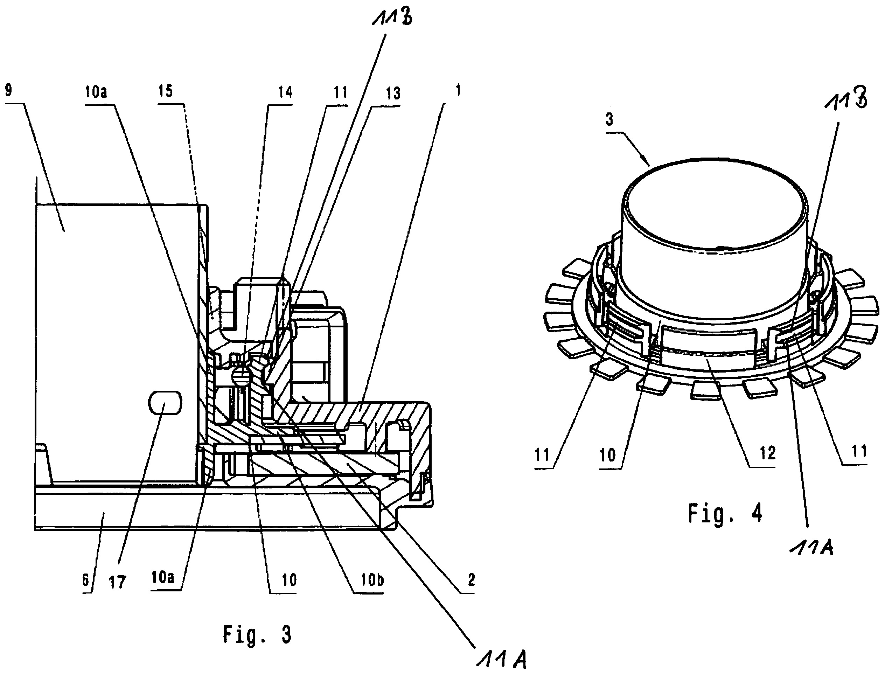

Wie aus den Figuren 1 bis 3 ersichtlich umfasst ein Drehwinkelsensor ein Gehäuse 1, in beziehungsweise an dem eine Leiterplatte 2 befestigt sowie zwei Rotoren 3, 4 drehbar gelagert sind. Die zwei Hauptflächen des Gehäuses 1 sind mit jeweils einem Deckel 6 verschlossen, von denen einer nicht dargestellt ist. Der Drehwinkelsensor ist z.B. in einem Kraftfahrzeug einer Lenksäule zugeordnet, wobei die Rotoren 3, 4 mit dieser mitdrehen. Das Gehäuse 1 weist eine entsprechende kreisförmige Öffnung 1a auf, die in etwa zentrisch angeordnet ist. Im Bereich der Öffnung 1a ist eine ringförmige Rastnase 13 derart an das Gehäuse 1 angeformt, dass sie in die Öffnung 1a ragt. Zum Befestigen des Gehäuses 1 an einem feststehenden Teil des Kraftfahrzeugs ist ein Verbindungsstück 7 angeordnet, damit das Gehäuse 1 relativ zu der Lenkbewegung unbeweglich ist.

Die Leiterplatte 2 weist den Rotoren 3, 4 zugeordnete Statoren in Form von z.B. Leiterbahnen sowie elektrische und/oder elektronische Bauteile auf. Die Statoren sind konzentrisch um eine im Wesentlichen kreisförmige Aussparung in der Leiterplatte 2 angeordnet, wobei die Aussparung mit der Öffnung 1a fluchtet. Die Leiterplatte 2 ist genau in einer vorbestimmten Position in dem Gehäuse 1 fixiert. An der Leiterplatte 3 ist ein Stecker 8 befestigt und elektrisch angeschlossen, der bei montiertem Drehwinkelsensor an dem Gehäuse 1 gehalten ist.

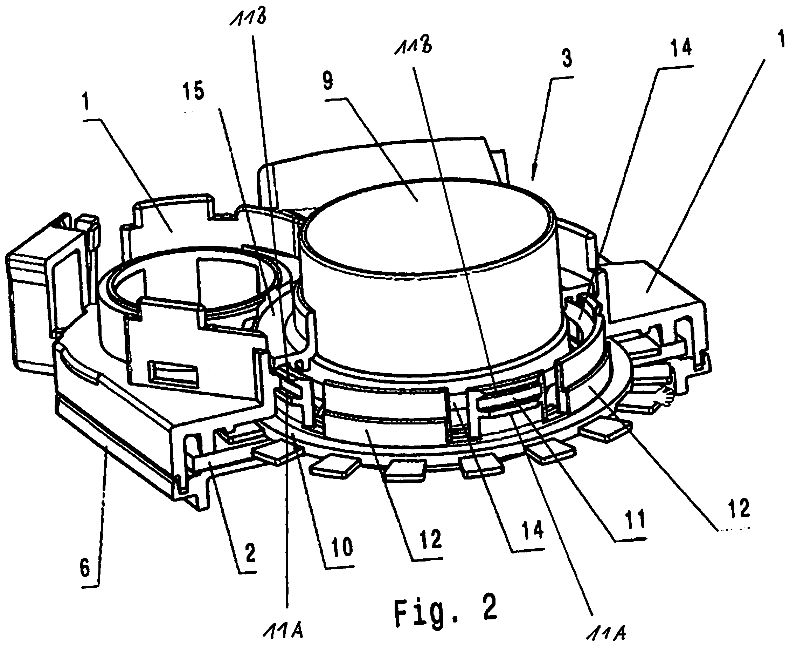

Ein erster der Rotoren 3 ist aus den Figuren 2 bis 4 besonders gut erkenntlich. Er umfasst eine erste Rotorstruktur, eine Hülse 9 sowie einen Halter 10, an dem die Rotorstruktur und die Hülse 9 befestigt sind.

Die kreisrohrförmige Hülse 9 ist aus Metallblech gefertigt, wobei Enden, die beim Biegen zu dem Rohr aneinanderstoßen, puzzleartig mit Omega-förmigen Ein- und Ausbuchtungen zusammengefügt sind. Die Enden sind zusätzlich verschweißt. Der Halter 10 ist im Spritzguss außen um die Hülse angeformt, wobei an der Innenseite der Hülse 9 gleichzeitig ein Führungsnocken 17 ausgebildet ist. Dieser dient als zusätzliche Verdrehsicherung zwischen dem ersten Rotor 3 und einem Torsionselement der Lenksäule. Bei montiertem Drehwinkelsensor ist der Führungsnocken 17 in einer entsprechenden axialen Nut des Torsionselements geführt.

Der Halter 10 ist aus einem Rohrstück 10a gebildet, an dessen einen - nach den Figuren 1 bis 4 unteren - Endbereich eine Ringscheibe 10b nach außen weisend so angeformt ist, dass zwischen beiden ein rechter Winkel gebildet ist. In eine untere Fläche der Ringscheibe 10b ist die erste Rotorstruktur so eingelassen, dass diese bündig mit der unteren Fläche der Ringscheibe 10b ist und radial um eine vorbestimmte Länge kreisringförmig aus der Ringscheibe 10b herausragt. Auf der anderen, oberen Fläche der Ringscheibe 10b sind abwechselnd Rastarme 11 und Lagersegmente 12 so angeordnet, dass sie einen vorbestimmten konstanten radialen Abstand zu dem Rohrstück 10a aufweisen. Die Lagersegmente 12 weisen eine geringfügig größere Höhe auf als die Rastarme 11. In diese ist eine nach außen gerichtete Rastnut eingelassen, die parallel zu der Ringscheibe 10b ist und mit der entsprechenden Rastnase 13 des Gehäuses 1 korrespondiert. Die Lagersegmente 12 sind derart ausgebildet, dass sie ein geringes Spiel zu dem Innenumfang der Rasnase 13 aufweisen. Die Rastarme 11 sind leicht gegen die Rastnase 13 vorgespannt.

Damit ist der erste Rotor 3 exakt in einer vorbestimmten Position des Gehäuses 1 gelagert, so dass die erste Rotorstruktur und die Leiterplatte 3 mit dem ersten Stator genau eine vorgesehene relative Position einnehmen. Auf diese Weise sind Bestimmungen des Drehwinkels besonders sehr genau durchführbar.

Zur Unterstützung der Vorspannung insbesondere bei höherenTemperaturen und bei normalem Verschleiß ist innen an den Rastarmen 11 und den Lagersegmenten 12 ein Federring 14 aus Metall gelagert. Der Federring 14 ist mit Übermaß gefertigt und erzeugt so eine vorbestimmte leichte Vorspannung gegen die Rastarme 11 und die Lagersegmente 12.

An einem oberen Ende des Rohrstücks 10a und konzentrisch mit diesem sowie an oberen Enden der Lagersegmente 12 ist ein Haltering 15 befestigt, der an seiner unteren Seite derart ausgebildet ist, dass er die Rastarme 11 stabilisiert. Hierfür sind an den oberen Enden der Lagersegmente 12 Materialüberstände ausgebildet, die unter Wärmeeinwirkung mit dem Haltering 15 verschweißbar sind.

Der Haltering 15 kann als ein erstes Zahnrad ausgebildet sein. Dieses wirkt auf ein zweites Zahnrad, das in dem Gehäuse 1 gelagert ist. Hierdurch lassen sich sowohl Zählfunktionen von ganzen oder Teilumdrehungen der Lenksäule als auch absolute Lenkwinkel-Messfunktionen realisieren.

Mit dem Torsionselement der Lenksäule ist der zweite Rotor 4 drehfest verbunden. Dieser weist eine zweite Rotorstruktur auf und ist dem zweiten Stator zugeordnet. Der zweite Rotor 4 ist außerhalb des Gehäuses 1 mit vorbestimmtem Abstand zu dem zweiten Stator gelagert.

### Bezugszeichenliste

- 1: Gehäuse
- 1a: Öffnung
- 2: Leiterplatte
- 3: erster Rotor
- 4: zweiter Rotor
- 5 6: Deckel
- 7: Verbindungsbauteil
- 8: Stecker
- 9: Hülse
- 10: Halter
- 10a: Rohrstück
- 10b: Ringscheibe
- 11: Rastarm
- 12: Lagersegment
- 13: Rastnase
- 14: Federring
- 15: Haltering
- 16 17: Führungsnocken

## Patentansprüche

1. Drehwinkelsensor zur Bestimmung einer relativen Winkelstellung bezüglich einer Referenzposition, umfassend
ein Gehäuse (1),
mindestens einen Rotor (3, 4), der drehbar in dem Gehäuse (1) gelagert ist und
eine Leiterplatte (2) mit elektrischen und/oder elektronischen Bauteilen sowie einem oder mehreren Statoren entsprechend der Anzahl der Rotoren (3, 4),
**dadurch gekennzeichnet,**
▪ dass ein erster Rotor (3) ohne axiales Spiel mit dem Gehäuse (1) mittels einer Rastnase (13) und einer korrespondierenden Rastnut verrastet ist, wobei ein mit Übermaß gefertigter Federring (14) mit Vorspannung auf Rotor-Rastarme (11) angeordnet ist,
▪ dass der Federring (14) innen an den Rotor-Rastarmen (11) gelagert ist,
▪ dass in die Rotor-Rastarme (11) jeweils eine nach außen gerichtete Rastnut eingelassen ist,
▪ dass Lagerflächen (11A, 11B) des ersten Rotors (3) im Gehäuse (1) zwischen der an dem Gehäuse (1) angeordneten Rastnase (13) und an dem ersten Rotor (3) ausgebildeten Rotor-Rastarmen (11) gebildet sind.

2. Drehwinkelsensor nach Anspruch 1, **dadurch gekennzeichnet, dass** eine der Lagerflächen (11B) durch entsprechend gefaste Flächen an dem ersten Rotor (3) und dem Gehäuse (1) gebildet ist.

3. Drehwinkelsensor nach einem der Ansprüche 1 bis 2, **dadurch gekennzeichnet, dass** die Lagerflächen (11A, 11B) mit Schmierstoff versehen sind.

4. Drehwinkelsensor nach Anspruch 3, **dadurch gekennzeichnet, dass** das Gehäuse (1) und/oder Teile des ersten Rotors (3) aus einem Kunststoff mit einem Anteil an eingebettetem Schmierstoff gefertigt ist.

5. Drehwinkelsensor nach einem der Ansprüche 1 bis 4, **dadurch gekennzeichnet, dass** ein Haltering (15) mit freien Enden von Lagersegmenten (12) verschweißt ist.

## Claims

1. Rotary angle sensor to determine a relative angle setting in relation to a reference position comprising
a housing (1)
at least one rotor (3, 4) that is mounted on a bearing in the housing (1) such that it can rotate and
a printed circuit board (2) with electric and/or electronic components and one or more stators matching the number of rotors (3,4)
**characterized in that**
• a first rotor (3) without axial play is latched onto the housing (1) by means of a catch tab (13) and a corresponding groove, where a spring washer manufactured to be oversized (14) is arranged prestressed on a rotor arm (11)
• the spring washer (14) is mounted inside on a bearing at the rotor arms (11)
• a groove oriented towards the outside has been recessed into each of the rotor arms (11)
• bearing surfaces (11A, 11B) of the first rotor (3) in the housing (1) are formed between the catch tab (13) arranged on the housing (1) and the rotor arms (11) formed on the first rotor (3).

2. Rotary angle sensor according to claim 1, **characterized in that** one of the bearing surfaces (11B) is formed by correspondingly beveled surfaces on the first rotor (3) and the housing (1).

3. Rotary angle sensor according to one of Claims 1 through 2
**characterized in that** the bearing surfaces (11A, 11B) are provided with lubricant.

4. Rotary angle sensor according to Claim 3, **characterized in that** the housing (1) and/or parts of the first rotor (3) are made of a plastic with a proportion of embedded lubricant.

5. Rotary angle sensor according to one of Claims 1 through 4,
**characterized in that** a retaining ring (15) is welded to free ends of bearing segments (12).

## Revendications

1. Capteur de rotation pour la détection d'une position angulaire relative par rapport à une position de référence, comprenant
un boîtier (1),
au moins un rotor (3, 4) disposé dans le boîtier (1) de manière à pouvoir pivoter et
un circuit imprimé (2) avec des composants électriques et/ou électroniques, ainsi qu'un ou plusieurs stators, en fonction du nombre de rotors (3, 4),
**caractérisé en ce que**
• un premier rotor (3) s'enclenche dans le boîtier (1) sans jeu axial à l'aide d'une clavette (13) et d'une rainure d'enclenchement correspondante, sachant qu'une rondelle de sécurité (14) à saillie est disposée sur les bras d'enclenchement (11) du rotor avec une précontrainte,
• la rondelle de sécurité (14) est placée vers l'intérieur, sur les bras d'enclenchement (11) du rotor,
• les bras d'enclenchement (11) du rotor présentent chacun une rainure d'enclenchement dirigée vers l'extérieur,
• les surfaces de contact (11A, 11B) du premier rotor (3) se trouvent entre la clavette (13) du boîtier (1) et les bras d'enclenchement (11) du premier rotor (3).

2. Capteur de rotation selon la revendication 1, **caractérisé en ce que** l'une des surfaces de contact (11B) est formée au niveau du premier rotor (3) et du boîtier (1) grâce aux surfaces chanfreinées.

3. Capteur de rotation selon l'une des revendications 1 à 2, **caractérisé en ce que** les surfaces de contact (11A, 11B) sont lubrifiées.

4. Capteur de rotation selon la revendication 3, **caractérisé en ce que** le boîtier (1) et/ou des pièces du premier rotor (3) sont en plastique additionné de lubrifiant.

5. Capteur de rotation selon l'une des revendications 1 à 4, **caractérisé en ce qu'**une rondelle de maintien (15) est soudée aux extrémités libres des segments de palier (12).
